# FASCICULE DE BREVET EUROPEEN

(11) **EP 2 002 384 B1**
(45) Date de publication et mention de la délivrance du brevet: **14.09.2011**
(21) Numéro de dépôt: 07731194.2
(22) Date de dépôt: 23.03.2007
(51) Int. Cl.: G06K 19/077, H01Q 7/00

(54) **DISPOSITIF RADIOFREQUENCE**
HOCHFREQUENZANORDNUNG
RADIOFREQUENCY DEVICE

(30) Priorité: 24.03.2006 FR 0651028
(43) Date de publication de la demande: 17.12.2008
(73) Titulaire: Arjowiggins Security, 92130 ISSY LES MOULINEAUX (FR)
(72) Inventeur: DOUBLET, Pierre, F-77160 Saint-Brice (FR)
(74) Mandataire: Leszczynski, André
(86) Numéro de dépôt international: PCT/FR2007/000511
(87) Numéro de publication internationale: WO 2007/118962

(56) Documents cités:
- EP-A1- 1 031 939
- CH-A5- 669 079
- US-A1- 2004 046 663
- US-B1- 6 774 865

## Description

La présente invention concerne les dispositifs radiofréquence et plus particulièrement ceux comportant un composant électronique pourvu d'une antenne intégrée, couplée électromagnétiquement à une antenne d'amplification, encore appelée antenne « booster ».

La demande EP 1 031 939 divulgue un dispositif radiofréquence comportant un composant électronique et plusieurs antennes.

De tels dispositifs radiofréquence sont largement connus.

La présence de l'antenne booster permet d'accroître la portée de l'échange radio.

A la connaissance de la demanderesse, les antennes booster sont seulement réalisées par gravure ou sérigraphie.

Ces techniques nécessitent, pour fermer électriquement l'antenne, de relier les extrémités de celle-ci par un *strap* (pont conducteur) qui doit traverser les spires de l'antenne et donc être isolé de celles-ci.

Dans le cas de la sérigraphie, l'isolation est obtenue au moyen d'une couche d'un isolant qui est déposée sur les spires avant la formation du strap, au cours d'une seconde passe de sérigraphie.

Dans le cas de l'antenne gravée, le strap peut être rapporté mécaniquement, il est alors généralement composé d'une couche isolante en plastique sur lequel est déposée une couche conductrice, la conduction électrique étant assurée par mise en contact mécanique, notamment sertissage, ou par l'utilisation d'un adhésif conducteur.

La fabrication de ces antennes est ainsi relativement complexe, elle nécessite plusieurs opérations sur la même machine, voire plusieurs machines.

De plus, leur fiabilité s'avère insuffisante en cas d'utilisation prolongée lorsqu'elles sont solidaires d'un substrat pouvant subir des déformations importantes, car la résistance ohmique des pistes conductrices tend à augmenter dans les régions sollicitées mécaniquement, ce qui dégrade alors les performances de l'antenne.

Il est également connu de réaliser des antennes filaires par dépôt d'un fil électriquement isolé sur une feuille d'un substrat et de connecter les extrémités de ce fil à un composant électronique tel qu'un module. La connexion au module s'effectue par thermocompression, avec création d'un arc électrique qui provoque une fusion locale de matière et une destruction locale de l'isolation du fil, ou par soudage avec métal d'apport.

Il existe un besoin pour perfectionner encore les dispositifs radiofréquence comportant une antenne booster.

L'invention a ainsi pour objet un dispositif radiofréquence selon la revendication 1.

Ces deux extrémités peuvent être reliées en étant assemblées directement l'une à l'autre ou peuvent être reliées par l'intermédiaire d'un élément rapporté, lequel est par exemple un élément conducteur présentant une faible résistivité électrique, avantageusement au moins partiellement métallique.

Grâce à l'invention, la fabrication de l'antenne peut être simplifiée car il n'est plus nécessaire, le fil étant isolé, de réaliser le dépôt successif d'une couche d'un isolant et d'un strap pour fermer électriquement l'antenne.

De plus, l'utilisation d'un fil et non d'une piste conductrice formée par sérigraphie ou gravure accroît la fiabilité en cas de sollicitation mécanique importante du substrat.

Les extrémités de l'antenne sont connectées entre elles dans une zone de connexion qui est éloignée du substrat, grâce par exemple à la présence dans la feuille de substrat d'un évidement où se situe la zone de connexion.

Par « éloignée du substrat », il faut comprendre que les extrémités de l'antenne connectées dans la zone de connexion ne sont pas en contact avec le substrat. Elles peuvent venir au contact d'un matériau de remplissage rapporté sur le substrat.

Ainsi, la feuille de substrat n'est pas endommagée lors de la soudure des extrémités de l'antenne.

L'élément conducteur précité peut être disposé dans l'évidement, les extrémités du fil étant connectées à cet élément conducteur.

L'évidement peut traverser ou non la feuille de substrat.

Dans un exemple de mise en oeuvre de l'invention, l'évidement est rempli d'un matériau de remplissage, lequel comporte par exemple une résine. Cela peut permettre d'améliorer l'aspect extérieur de la feuille de substrat une fois les extrémités du fil d'antenne connectées entre elles.

La zone de connexion peut être située à la périphérie de l'antenne, ce qui peut améliorer la qualité du couplage électromagnétique avec le composant électronique, ou ailleurs.

Les extrémités du fil d'antenne qui sont connectées ensemble peuvent être orientées sensiblement parallèlement ou en variante être orientées sensiblement perpendiculairement.

Les extrémités du fil d'antenne peuvent être connectées sans apport de matière, ou avec apport de matière, notamment apport d'un alliage métallique.

Les extrémités connectées peuvent être aplaties, ce qui permet de limiter la surépaisseur qui est éventuellement générée dans la zone de connexion.

Le fil d'antenne peut être un fil émaillé, notamment un fil de cuivre émaillé. Ce fil peut présenter une section circulaire, le diamètre du fil étant par exemple inférieur ou égal à 100 µm, mieux à 80 µm.

Le dispositif peut comporter au moins une couche de recouvrement recouvrant l'antenne, du côté opposé à la feuille de substrat. Cette couche de recouvrement peut être revêtue, sur sa face tournée vers l'antenne, d'un adhésif.

Le fil d'antenne peut être au moins partiellement enfoui dans la feuille du substrat et/ou dans la couche de recouvrement. Cet enfouissement peut résulter par exemple de la technique utilisée pour déposer le fil d'antenne sur la feuille de substrat.

L'enfouissement peut résulter de l'exposition du fil et de la feuille de substrat à des vibrations ultrasonores.

L'une au moins de la feuille de substrat et de la couche de recouvrement peut comporter des fibres, lesquelles peuvent comporter des fibres papetières, par exemple des fibres cellulosiques.

Le dispositif radiofréquence peut être dépourvu de composant électronique. En variante, le dispositif radiofréquence peut comporter un composant électronique pourvu d'une antenne intégrée, couplée électromagnétiquement par une liaison sans contact à l'antenne filaire booster.

Le composant électronique peut comporter une puce fixée sur un substrat sur lequel est réalisée l'antenne intégrée, un tel composant étant encore appelé module antenne. Le composant électronique peut aussi être une puce ayant déjà son antenne sur le silicium, un *inlay* (implant) flexible ou rigide, un *prelam* (insert) ou une carte à base de plastique notamment.

La feuille de substrat peut comporter au moins un évidement dans lequel est engagé au moins partiellement le composant électronique. Cela peut permettre de réduire l'épaisseur du dispositif radiofréquence.

Le composant électronique peut présenter une forme étagée avec une partie de base élargie. La feuille de substrat peut comporter un évidement recevant cette partie de base, l'épaisseur de la feuille de substrat pouvant correspondre sensiblement à celle de la partie de base.

Le composant électronique peut être situé à l'intérieur ou à l'extérieur de la ou des spires de l'antenne booster, lorsque cette dernière est observée de dessus. Les spires de l'antenne peuvent s' étendre sensiblement dans un plan.

Le composant électronique et l'antenne booster peuvent appartenir à la même feuille de substrat ou être réalisés sur des feuilles différentes.

Le dispositif radiofréquence peut être intégré dans un premier article et le composant électronique peut être intégré dans un deuxième article pouvant être rendu solidaire du premier de façon à réaliser le couplage électromagnétique entre l'antenne intégrée du composant électronique et l'antenne booster du dispositif radiofréquence. Le deuxième article peut être séparable du premier, le cas échéant.

Les premier et deuxième articles peuvent être des documents de sécurité. Le premier article peut être par exemple un passeport et le deuxième article un visa destiné à être collé ou agrafé à ce passeport.

Le premier article peut encore être une carte d'identification, de paiement ou d'abonnement et le deuxième article un coupon temporaire de validation de la carte.

Le premier article peut encore être un porte-cartes et le deuxième article une carte agencée pour se loger dans le porte-cartes.

L'invention a encore pour objet un procédé de fabrication d'un dispositif radiofréquence selon la revendication 10.

La connexion des extrémités peut avoir lieu dans ou au-dessus d'un évidement de la feuille de substrat, ce qui permet d'éviter un contact du substrat avec la matière à haute température lors de la connexion.

Un élément conducteur électrique peut être disposé dans l'évidement du substrat et la connexion des extrémités peut s'effectuer par l'intermédiaire de cet élément conducteur ou sur celui-ci.

Par exemple, les deux extrémités du fil d'antenne peuvent être soudées à l'élément conducteur, lequel ferme électriquement l'antenne, ou en variante être soudées entre elles et à l'élément conducteur, ce dernier ne jouant alors aucun rôle électrique.

La connexion des extrémités du fil d'antenne peut encore s'effectuer contre une enclume d'un support sur lequel est déposée la feuille du substrat, à travers l'évidement. Cette enclume est par exemple une pièce d'usure rapportée sur le support, et peut faire saillie sur le support, de façon à s'engager au moins partiellement dans l'évidement.

La connexion peut également s'effectuer après interposition, entre les extrémités à connecter et la feuille de substrat, d'une enclume. L'évidement précité peut dans ce cas notamment être supprimé.

Les extrémités à connecter peuvent être orientées parallèlement et maintenues serrées latéralement l'une contre l'autre durant la connexion, ou être sensiblement perpendiculaires avant la connexion.

Le fil d'antenne peut être déposé sur le substrat avec enfouissement au moins partiel dans celui-ci, par fusion locale de la feuille de substrat.

L'épaisseur du fil antenne peut être partiellement ou complètement compensée par le ou les adhésifs et matériaux d'assemblage.

Un évidement peut permettre la compensation partielle ou totale de l'épaisseur du composant électronique lorsque celui-ci est présent, pour éviter qu'il ne fasse saillie.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente en vue de dessus, de façon schématique, un exemple d'*inlay* réalisé conformément à l'invention,
- la figure 2 est une coupe schématique selon II-II de la figure 1,
- la figure 3 est une coupe partielle à échelle agrandie selon III-III de la figure 1,
- les figures 4 et 5 sont des vues de dessus représentant des exemples d'orientations parmi d'autres des extrémités connectées de l'antenne,
- la figure 6 est une vue analogue à la figure 2 d'une variante de mise en oeuvre de l'invention,
- la figure 7 est une vue analogue à la figure 3 d'une variante de mise en oeuvre de l'invention,
- les figures 8 à 12 illustrent différentes possibilités de réalisation de la connexion des extrémités de l'antenne,
- la figure 10 représente un support pouvant être utilisé dans le cadre de la réalisation de la connexion selon la figure 9,
- les figures 13 et 14 illustrent le remplissage de l'évidement situé dans la zone de connexion par un matériau de remplissage, et
- les figures 15 à 17 représentent différents exemples d'ensembles réalisés avec un dispositif radiofréquence selon l'invention,
- la figure 18 est une vue analogue à la figure 1 d'un autre exemple de mise en oeuvre de l'invention, et
- les figures 19 et 20 sont des vues analogues à la figure 2 d'autres exemples de mise en oeuvre de l'invention.

Sur les figures, les proportions relatives des différents éléments représentés n'ont pas toujours été respectées, dans un souci de clarté du dessin.

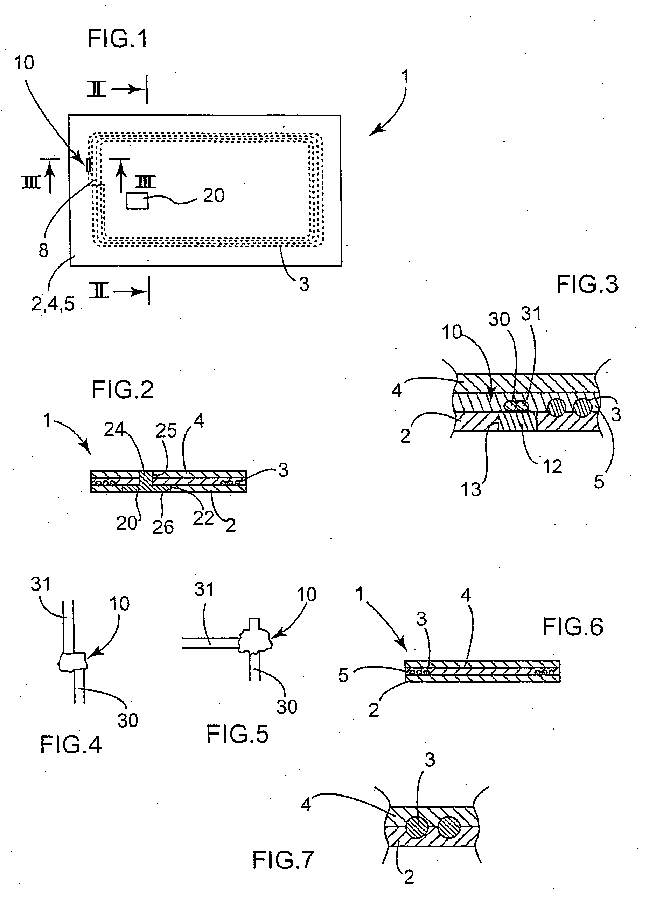

On a représenté sur les figures 1 à 3 un *inlay* 1 comportant une feuille 2 d'un substrat, une antenne 3 et une couche de recouvrement 4 revêtue sur sa face tournée vers la feuille 2 d'une couche 5 d'un adhésif.

L'antenne 3 est filaire, étant formée par l'enroulement sur la feuille 2 d'un fil de cuivre émaillé, de façon à former plusieurs spires concentriques.

Le fil 3 de l'antenne traverse dans une région 8 les spires afin de permettre aux deux extrémités du fil de se rejoindre dans une zone de connexion 10 située à la périphérie de l'antenne.

Dans l'exemple considéré, les extrémités du fil sont connectées ensemble sur un élément conducteur 12, lequel est par exemple métallique et reçu dans un évidement 13 de la feuille 2, comme on peut le voir sur la figure 3.

Les extrémités du fil de l'antenne sont par exemple assemblées entre elles par thermocompression, grâce à un dispositif de thermocompression qui permet de porter le fil à une température suffisante pour provoquer sa fusion.

Le fil utilisé est par exemple un fil de cuivre émaillé et la soudure par thermocompression permet de détruire localement l'émail.

Le dispositif radiofréquence comporte également un composant électronique, par exemple un dispositif RFID, 20 qui inclut une antenne intégrée, couplée électromagnétiquement à l'antenne booster 3.

Le composant électronique 20 peut être situé à l'intérieur des spires, comme illustré à la figure 1, en un emplacement qui est par exemple déterminé de manière à optimiser le couplage électromagnétique avec l'antenne booster 3.

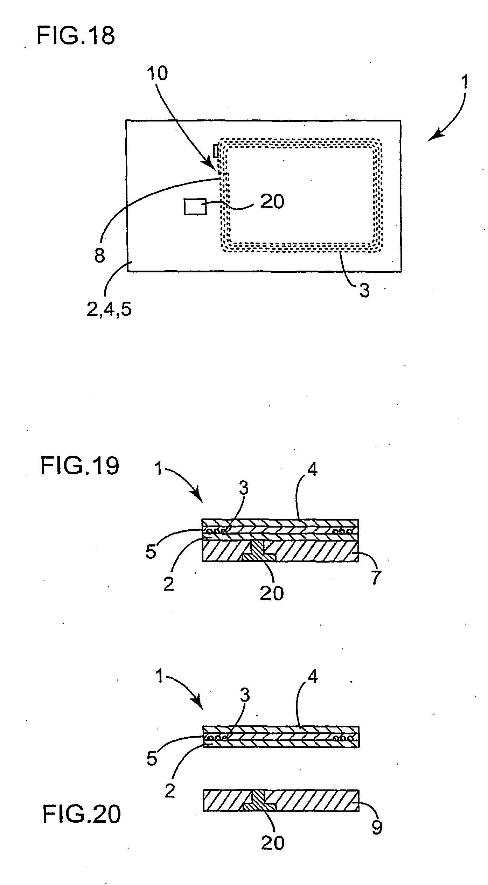

En variante, comme illustré à la figure 18, le composant électronique 20 peut être situé à l'extérieur des spires.

Le composant électronique 20 peut être un module antenne ou un *inlay,* capable éventuellement de fonctionner de manière autonome, comportant un substrat sur lequel est réalisée l'antenne intégrée, par exemple par gravure ou sérigraphie, et qui est connectée à la puce, cette dernière étant par exemple de type *flip chip* (puce retournée), agencée de façon à permettre une connexion avec le substrat par contact, lors de sa pose.

Le composant électronique 20 peut comporter au moins une mémoire et un processeur permettant de lire et/ou d'écrire dans la mémoire. Le module antenne peut comporter un microprocesseur notamment.

Le cas échéant, le composant électronique 20 peut comporter au moins un capteur d'au moins une condition environnante, par exemple un capteur d'humidité, de température, d'hygrométrie, de lumière, ou sensible à un stimulus extérieur, par exemple la présence d'un composé ou d'un organisme.

Le composant électronique 20 peut encore, éventuellement, comporter au moins un indicateur visuel, à cristaux liquides ou électroluminescent, et/ou un capteur d'empreinte digitale.

Le composant électronique 20 peut comporter, comme illustré, une partie de base 26 élargie dont l'épaisseur correspond sensiblement à celle de la feuille de substrat, qui est reçue dans un évidement 22 de la feuille 2, la partie supérieure 24 du composant 20 étant reçue dans un évidement 25 de la couche de recouvrement 4 et de la couche d'adhésif 5.

L'épaisseur cumulée de la feuille 2, de la couche de recouvrement 4 et de la couche d'adhésif 5 peut correspondre sensiblement à la hauteur totale du composant électronique 20, de telle sorte que l'*inlay* 1 présente une épaisseur sensiblement uniforme sur toute son étendue.

De préférence, la zone de connexion 10 se situe à la périphérie extérieure de l'antenne, mais dans une variante non illustrée, cette zone de connexion 10 peut se trouver à l'intérieur des spires. La présence de la zone de connexion 10 à la périphérie de l'antenne 10 peut améliorer l'homogénéité du couplage électromagnétique avec l'antenne intégrée du composant électronique 20.

Les extrémités 30 et 31 du fil de l'antenne 3 peuvent être orientées sensiblement parallèlement lorsqu'elles quittent la zone de connexion 10, comme illustré à la figure 4, ou arriver parallèlement de la même direction.

En variante, comme illustré à la figure 5, ces extrémités 30 et 31 peuvent être orientées sensiblement perpendiculairement.

Dans l'exemple représenté à la figure 19, le composant électronique 20 est reçu dans une couche 7 faisant partie de l'inlay 1.

L'*inlay* 1 peut être réalisé sans le composant électronique 20, celui-ci étant alors extérieur à l'*inlay* 1, comme illustré à la figure 6.

Dans la variante représentée à la figure 20, le composant électronique est reçu dans une couche 9ne faisant pas partie de l'inlay 1.

Que le composant électronique 20 soit présent ou non, l'*inlay* peut comporter la feuille 2 et la couche de recouvrement 4 sans la couche intermédiaire 5 d'adhésif, comme illustré à la figure 7. Le fil d'antenne 3 peut dans ce cas notamment être au moins partiellement enfoui dans la feuille 2 et/ou dans la couche de recouvrement 4, de façon à ne pas générer de surépaisseur excessive au-dessus de l'antenne 3.

L'assemblage des extrémités 30 et 31 de l'antenne peut s'effectuer de diverses manières.

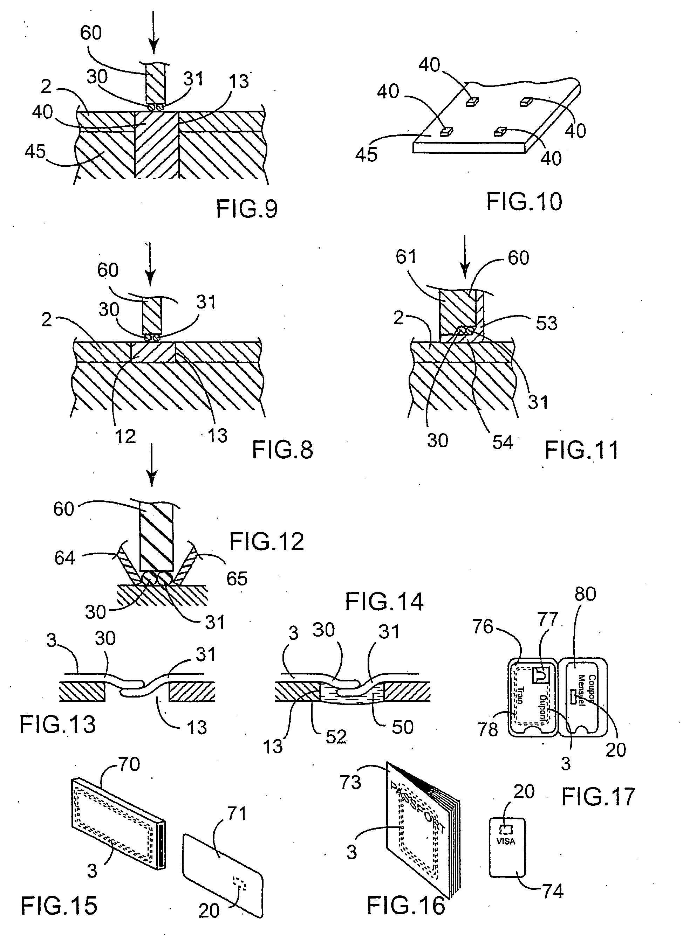

Lorsqu'un élément rapporté 12 est présent dans un évidement 13 de la feuille 2, comme illustré à la figure 8, la thermocompression peut s'effectuer contre cet élément rapporté 12, lequel est prévu pour résister à la chaleur générée lors de l'assemblage. L'élément rapporté 12 est par exemple un élément métallique, par exemple une plaquette de cuivre.

Les extrémités 30 et 31 peuvent être assemblées chacune à l'élément conducteur 12 sans être assemblées directement ensemble. En variante, les extrémités 30 et 31 peuvent être assemblées ensemble sans être assemblées à l'élément rapporté 12, ce dernier servant d'enclume lors de la thermocompression et pouvant ne pas être conducteur électrique. En variante encore, les extrémités 30 et 31 peuvent être assemblées ensemble et à l'élément rapporté 12.

La feuille 2 peut également être dépourvue d'élément rapporté 12 et l'assemblage des extrémités 30 et 31 peut s'effectuer à travers l'évidement 13 contre une enclume 40 qui fait saillie sur un support 45 sur lequel repose la feuille 2.

Le support 45 peut comporter, le cas échéant, plusieurs enclumes 40, comme illustré à la figure 10, notamment lorsque plusieurs *inlays* sont réalisés à partir d'une même feuille 2.

Chaque enclume 40 est par exemple prévue pour pouvoir être fixée de manière amovible sur le support 45, de façon à servir de pièce d'usure.

Chaque enclume 40 est par exemple en une céramique résistant à la température.

Une fois les extrémités 30 et 31 assemblées, comme illustré à la figure 13, un matériau de remplissage 50 peut être introduit dans l'évidement 13, comme illustré à la figure 14, afin d'éviter la présence d'un trou sur la face 52 de l'*inlay* opposée à la couche de recouvrement 4.

L'assemblage des extrémités 30 et 31 peut encore s'effectuer avec interposition entre la feuille 2 et les extrémités 30 et 31 d'une enclume 53 dont le pied 54 vient s'engager sous les extrémités 30 et 31. L'outil de thermocompression 60 peut comporter, le cas échéant, une ou plusieurs faces inclinées 61 permettant de comprimer latéralement les deux extrémités 30 et 31 l'une contre l'autre.

Le cas échéant, comme illustré à la figure 12, l'outil de thermocompression 60 peut appuyer sur les extrémités 30 et 31 alors que celles-ci sont maintenues latéralement par deux mâchoires 64 et 65.

L'invention s'applique à la réalisation d'un *inlay* qui comporte ou non, comme cela vient d'être décrit, un composant électronique 20 incluant une antenne intégrée couplée électromagnétiquement à l'antenne booster.

Lorsque l'*inlay* comporte le composant électronique 20, celui-ci peut par exemple être intégré dans un article, par exemple un document de sécurité, en remplacement des *inlays* conventionnels comportant une antenne filaire dont les extrémités sont connectées électriquement à une puce électronique ou à un module.

L'invention peut encore être mise en oeuvre en disposant l'antenne booster 3 sur un premier article et le composant électronique 20 sur un deuxième article.

Le premier article est par exemple un porte-cartes 70 comme illustré à la figure 15, le composant électronique 20 étant porté par une carte 71 destinée à être insérée dans le porte-cartes 70. Ainsi, le porte-cartes 70 peut offrir une sécurité supplémentaire contre un usage non autorisé de la carte 71, rendant plus difficile l'utilisation de celle-ci en l'absence du porte-cartes 70.

Le premier article comportant l'antenne booster 3 peut également être un passeport 73, l'antenne booster 3 étant par exemple intégrée à la couverture du passeport. Le deuxième article peut être un visa 74 comportant le composant électronique 20. L'antenne booster 3 du passeport permet la lecture d'informations contenues dans le composant électronique 20 du visa.

Le premier article peut encore être, comme illustré à la figure 17, une carte 76 d'identification, de paiement ou d'abonnement, comportant par exemple une photographie de l'utilisateur et reçue dans l'un des volets d'un étui 78 comportant deux volets. Le deuxième volet peut recevoir un coupon temporaire 80 intégrant le composant électronique 20, dont l'antenne intégrée se trouve couplée électromagnétiquement à l'antenne booster 3 de la carte 76 lorsque l'étui 78 est fermé.

Bien entendu, l'invention n'est pas limitée aux exemples de réalisation qui viennent d'être décrits.

En particulier, la feuille 2 de substrat peut être quelconque, comportant par exemple un film en matière plastique et/ou un ou plusieurs jets de papier.

Le cas échéant, la feuille 2 de substrat peut présenter une structure composite et comporter à la fois au moins une matière plastique et des fibres papetières.

La feuille 2 de substrat peut comporter des fibres cellulosiques.

La couche de recouvrement 4 peut présenter d'autres structures, comportant par exemple un film plastique et/ou un ou plusieurs jets de papier.

L'expression « comportant un » doit être comprise comme étant synonyme de « comportant au moins un », sauf si le contraire est spécifié.

## Revendications

1. Dispositif radiofréquence (1, 70, 73, 76) comportant :
- au moins une feuille (2) de substrat,
- au moins une antenne booster filaire (3) déposée sur la feuille (2) de substrat, formée avec un fil conducteur électriquement isolé, comportant au moins une spire, ayant deux extrémités (30, 31) connectées électriquement entre elles,
**caractérisé en ce que** les deux extrémités (30, 31) sont connectées électriquement entre elles dans une zone de connexion (10) par fusion locale de matière, les deux extrémités (30, 31) étant lors de cette connexion sans contact avec la feuille (2) de substrat pour éviter l'endommagement de la feuille (2) de substrat.

2. Dispositif selon la revendication 1, la feuille (2) de substrat comportant dans la zone de connexion (10) un évidement (13).

3. Dispositif selon la revendication 2, un élément rapporté (12) étant disposé dans l'évidement (13).

4. Dispositif selon la revendication 3, les deux extrémités (30, 31) du fil étant connectées à l'élément rapporté (12).

5. Dispositif selon la revendication 4, l'élément rapporté étant métallique.

6. Dispositif selon l'une quelconque des revendications 3 à 5, l'évidement (13) traversant la feuille (2) de substrat.

7. Dispositif selon la revendication 6, l'évidement (13) étant rempli d'un matériau de remplissage (50).

8. Dispositif selon l'une quelconque des revendications précédentes, les deux extrémités (30, 31) du fil d'antenne étant connectées sans apport de matière.

9. Dispositif selon l'une quelconque des revendications 1 à 8, les deux extrémités (30, 31) connectées du fil d'antenne étant aplaties.

10. Procédé de fabrication d'un dispositif radiofréquence (1, 70, 73, 76), comportant les étapes suivantes :
- déposer sur au moins une feuille (2) de substrat un fil isolé électriquement de façon à former au moins une spire d'une antenne booster filaire (3),
- connecter électriquement deux extrémités (30, 31) de l'antenne entre elles, **caractérisé en ce que** les deux extrémités sont connectées électriquement entre elles par fusion locale de matière, les deux extrémités (30, 31) étant lors de cette connexion sans contact avec la feuille (2) de substrat pour éviter l'endommagement de la feuille (2) de substrat.

11. Procédé selon la revendication précédente, dans lequel la connexion des deux extrémités (30, 31) a lieu dans ou au-dessus d'un évidement (13) de la feuille (2) de substrat.

12. Procédé selon la revendication précédente, dans lequel un élément rapporté (12) est disposé dans l'évidement (13) et dans lequel la connexion des deux extrémités (30, 31) s'effectue par l'intermédiaire de cet élément (12).

13. Procédé selon la revendication 10, dans lequel la connexion s'effectue contre une enclume (40) d'un support (45) sur lequel est déposée la feuille (2) de substrat.

14. Procédé selon la revendication 10, dans lequel la connexion s'effectue après interposition entre les deux extrémités (30, 31) à connecter et la feuille (2) de substrat, d'une enclume (54).

15. Procédé selon l'une quelconque des revendications 10 à 14, dans lequel le fil d'antenne est déposé sur la feuille (2) de substrat avec enfouissement au moins partiel dans la feuille (2) de substrat.

## Claims

1. As RF device (1, 70, 73, 76) comprising:
- at least one sheet (2) of a substrate,
- at least one wire booster antenna (3) placed on the sheet (2) of a substrate, formed with an electrically insulated conductor wire, comprising at least one turn, having two ends (30, 31) electrically connected together, **characterized by** the fact that the two ends (30, 31) are electrically connected together in a connection zone (10) by local melting of maternal, the two ends (30, 31) having, during this connection, no contact with the sheet (2) of a substrate in order to prevent damaging the sheet (2) of a substrate.

2. The device as claimed in claim 1, the sheet (2) of substrate comprising in the connection zone (10) a recess (13).

3. The device as claimed in claim 2, a fitting element (12) being placed in the recess (13).

4. The device as claimed in claim 3, the two ends (30, 31) of the wire being connected to the fitted element (12).

5. The device as claimed in claim 4, the fitted element being metallic.

6. The device as claimed in any one of claims 3 to 5, the recess (13) passing through the sheet (2) of a substrate.

7. The device as claimed in claim 6, the recess (13) being filled with a filler material (50).

8. The device as claimed in any preceding claim, the two ends (30, 31) of the antenna wire being connected without added material.

9. The device as claimed in any one of claims 1 to 8, the two connected ends (30, 31) of the antenna wire being flattened.

10. A method of manufacturing a RF device (1, 70, 73, 76), comprising the following steps:
- placing on at least one sheet (2) of a substrate an electrically insulated wire so as to form at least one turn of a wire antenna (3),
- electrically connecting two ends (30, 31) of the antenna together, **characterized by** the fact that the two ends are electrically connected together by local melting of material, the two ends (30, 31) having, during this connection, no contact with the sheet (2) of a substrate in order to prevent damaging the sheet (2) of a substrate.

11. The method as claimed in the preceding claim, wherein the connection of the two ends (30, 31) takes place in or above a recess (13) of the sheet (2) of a substrate.

12. The assembly as claimed in the preceding claim, wherein a fitted element (12) is placed in the recess (13) and wherein the connection of the two ends (30, 31) is achieved by means of this element (12).

13. The assembly as claimed in claim 10, wherein the connection is achieved against an anvil (40) of a support (45) on which the sheet (2) of a substrate is placed.

14. The method as claimed in claim 10, wherein the connection is achieved after an anvil (54) is inserted between the two ends (30, 31) to be connected and the sheet (2) of a substrate

15. The method as claimed in any one of claims 10 to 14, wherein the antenna wire is placed on the sheet (2) of a substrate with at least partial burying in the sheet (2) of a substrate.

## Patentansprüche

1. Funkfrequenzvorrichtung (1, 70, 73, 76) mit
wenigstens einem Substratblatt (2),
wenigstens einer auf dem Substratblatt (2) angeordneten drahtförmigen Boosterantenne (3), die mit einem elektrisch isolierten Leitungsdraht gebildet ist und wenigstens eine Windung mit zwei elektrisch miteinander verbundenen Enden (30,31) aufweist,
**dadurch gekennzeichnet, dass** die zwei Enden (30, 31) in einer Verbindungszone (10) durch lokales Materialverschmelzen elektrisch miteinander verbunden sind, und die zwei Enden (30, 31) während dieses Verbindens ohne Kontakt mit dem Substratblatt (2) sind, um eine Beschädigung des Substratblatts (2) zu vermeiden.

2. Vorrichtung nach Anspruch 1, wobei das Substratblatt (2) in der Verbindungszone (10) eine Aussparung (13) ausweist.

3. Vorrichtung nach Anspruch 2, wobei in der Aussparung (13) ein Aufsteckelement (12) angeordnet ist.

4. Vorrichtung nach Anspruch 3, wobei die zwei Enden (30, 31) des Drahts mit dem Aufsteckelement (12) verbunden sind.

5. Vorrichtung nach Anspruch 4, wobei das Aufsteckelement metallisch ist.

6. Vorrichtung nach einem der Ansprüche 3 bis 5, wobei die Aussparung (13) das Substratblatt (2) durchdringt.

7. Vorrichtung nach Anspruch 6, wobei die Aussparung (13) mit einem Füllmaterial (50) ausgefüllt ist.

8. Vorrichtung nach einem der vorstehenden Ansprüche, wobei die zwei Enden (30, 31) des Antennendrahts ohne Materialeinbringung miteinander verbunden sind.

9. Vorrichtung nach einem der Ansprüche 1 bis 8, wobei die zwei verbundenen Enden (30, 31) des Antennendrahts abgeflacht sind.

10. Verfahren zur Herstellung einer Funkfrequenzvorrichtung (1, 70, 73, 76), in dem
auf wenigstens einem Substratblatt (2) ein elektrisch isolierter Draht so aufgebracht wird, dass er wenigstens eine Windung einer drahtförmigen Boosterantenne (3) bildet,
zwei Enden (30, 31) der Antenne elektrisch miteinander verbunden werden, **dadurch gekennzeichnet, dass** die zwei Enden durch lokales Materialverschmelzen elektrisch miteinander verbunden werden, und die zwei Enden (30, 31) während dieses Verbindens ohne Kontakt mit dem Substratblatt (2) sind, um eine Beschädigung des Substratblatts zu vermeidet.

11. Verfahren nach dem vorstehenden Anspruch, in dem das Verbinden der zwei Enden (30,31) in oder über einer Aussparung (13) des Substratblatts (2) erfolgt.

12. Verfahren nach dem vorstehenden Anspruch, in dem ein Aufsteckelement (12) in der Aussparung (13) angeordnet und das Verbinden der zwei Enden (30, 31) mittels dieses Elements (12) bewirkt wird.

13. Verfahren nach Anspruch 10, in dem das Verbinden gegen einen Amboss (40) einer Auflage (45) durchgeführt wird, auf die das Substratblatt (2) aufgelegt wird.

14. Verfahren nach Anspruch 10, in dem das Verbinden nach einem Zwischenschieben eines Ambosses (54) zwischen die zwei zu verbindenden Enden (30, 31) und das Substratblatt (2) durchgeführt wird.

15. Verfahren nach einem der Ansprüche 10 bis 14, in dem das Anordnen des Antennendrahts auf dem Substratblatt (2) so erfolgt, dass dieser wenigstens teilweise in das Substratblatt (2) eingebettet wird.
